# EUROPEAN PATENT SPECIFICATION

(11) **EP 2 186 675 B1**
(45) Date of publication and mention of the grant of the patent: **07.10.2015**
(21) Application number: 08828864.2
(22) Date of filing: 28.08.2008
(51) Int. Cl.: B60N 2/48, A47C 7/38, B60N 2/00, B60N 2/02

(54) **HEADREST POSITION ADJUSTING DEVICE, AND HEADREST POSITION ADJUSTING METHOD**
VORRICHTUNG ZUR EINSTELLUNG EINER KOPFSTÜTZENPOSITION UND VERFAHREN ZUR EINSTELLUNG EINER KOPFSTÜTZENPOSITION
DISPOSITIF ET PROCÉDÉ DE RÉGLAGE DE LA POSITION D'UN APPUI-TÊTE

(30) Priority: 28.08.2007 JP 2007220950
(43) Date of publication of application: 19.05.2010
(73) Proprietor: FUJIKURA LTD., Tokyo 135-8512 (JP)
(72) Inventor: YAMAGUCHI, Yuichiro, Sakura-shi Chiba 285-8550 (JP)
(74) Representative: Grünecker Patent- und Rechtsanwälte PartG mbB
(86) International application number: PCT/JP2008/065443
(87) International publication number: WO 2009/028622

(56) References cited:
- EP-A1- 2 141 047
- EP-A2- 1 857 318
- JP-A- 01 011 512
- JP-A- 08 015 347
- JP-A- 2000 309 242
- JP-A- 2004 123 087
- JP-B2- 3 347 069
- US-A1- 2005 253 712
- US-B1- 6 310 407

## Description

### Technical Field

The present invention relates to a head restraint position adjusting device and a head restraint position adjusting method which adjust a position of a head restraint attached to a seat of a vehicle like an automobile, and more particularly, a head restraint position adjusting device and a head restraint position adjusting method which automatically adjust a position of the head restraint to an appropriate position, see, for example, US 2005/0253712 A1, corresponding to the preamble of either independent claim.

### Background Art

Conventionally, there are devices which adjust a position of a head restraint attached to a seat of a vehicle like an automobile. That is, JP 2007-30676 A, hereafter called patent literature 1, discloses a vehicular head restraint device that comprises an ECU (Electronic Control Unit) which compares an amount of change in a capacitance detected by a capacitance sensor with a threshold set beforehand when a front portion of a head restraint is moved in a direction of fully-open position, and which determines that the front portion of the head restraint is moved closer to a head of a driver/passenger when the amount of change is greater than the threshold.

The ECU detects a change in capacitance per unit displacement of the capacitance sensor at a predetermined timing, changes the threshold based on a detection result, changes the threshold at a regular time interval, or changes the threshold based on a drive voltage for a motor. Accordingly, the ECU precisely detects that the front portion of the head restraint is moved close to the head of the driver/passenger.

JP 2000-309242 A, hereafter called Patent literature 2, discloses a device for adjusting a head restraint. Such a device comprises a sensor including two capacitor plates which are for detecting a position of a head of a driver/passenger, and which are arranged inside the head restraint. The two capacitor plates are arranged in the vertical direction inside the head restraint.

As far as a sensor signal from one capacitor plate increases while at the same time a sensor signal from another capacitor plate decreases, a position of the head restraint in height is adjusted in such a manner as to be changed from a home position where the head restraint is retracted.

JP S 64-11512 A, hereafter called Patent literature 3, discloses a head restraint driving device that comprises support means for movably supporting a head restraint, drive means for reciprocatingly driving the head restraint, plural detection electrodes which are spaced apart from one another inside a portion of an external cover of the head restraint supporting a head, capacitance detection means for detecting a capacitance formed by the plural detection electrodes relative to a common potential line, and position control means for controlling the drive means to move the head restraint in a direction in which the capacitance is balanced.

The head restraint is driven in such a way that the head is located at a center of the plural detection electrodes, in other words, the head restraint is located in accordance with a motion of the head, and then a position of the head restraint is automatically adjusted.

JP H 11-180 200 A, hereafter called Patent literature 4, discloses a head restraint adjusting device that comprises a head restraint movable in the vertical direction by a motor and arranged on the top of a seat back (backrest), a head detection sensor which detects a position of a head of a user (driver/passenger) sitting down on a seat, and a CPU which adjust a height of the head restraint in accordance with a position of the head of the user sitting down on the seat based on a signal from the head detection sensor.

When the CPU detects that an ignition switch is turned on, a seating detection sensor detects that the user is seated, and a seatbelt buckle switch detects that a seat belt is fastened, an operation of adjusting the head restraint can be started.

Patent Literature 1: JP2007-30676A
Patent Literature 2: JP2000-309242A
Patent Literature 3: JPS64-11512A
Patent Literature 4: JPH11-180200A

### Disclosure of Invention

### Problem to be Solved by the Invention

According to the vehicular head restraint device disclosed in patent literature 1 or the device for adjusting the head restraint disclosed in patent literature 2, however, a capacitance between the head and the sensing electrode is measured and the measurement result is used for adjusting the position using one capacitance sensor in the case of the former device and two or three capacitor plates in the case of the latter device.

According to the head restraint driving device disclosed in patent literature 3 or the head restraint adjusting device disclosed in patent literature 4, the position of the head restraint is adjusted based on a capacitance between the head restraint and a roof or the like of the vehicle in the case of the former device, and based on an adjustment result of each part of the seat in the case of the latter device.

Accordingly, in adjusting the position of the head restraint, it is necessary to detect a center of the head while comparing an output balance of a sensor and an output peak of each sensing electrode by, for example, moving the head restraint. This kind of detection fashion requires a detection operation of moving the head restraint having the sensing electrode thereinside, for example, from bottom to top in the height direction to specify a position where an output of the sensor is balanced or to detect an output peak of each sensing electrode. Therefore, it is difficult to carry out position adjustment highly precisely within a short time.

In particular, according to the foregoing detection fashion, it is not considered that a factor other than a shape of the head may fluctuate an output of the sensors as the head moves while the position thereof is being detected. Accordingly, it takes a certain amount of adjustment time to carry out position adjustment highly precisely, so that position adjustment cannot be carried out within a short time.

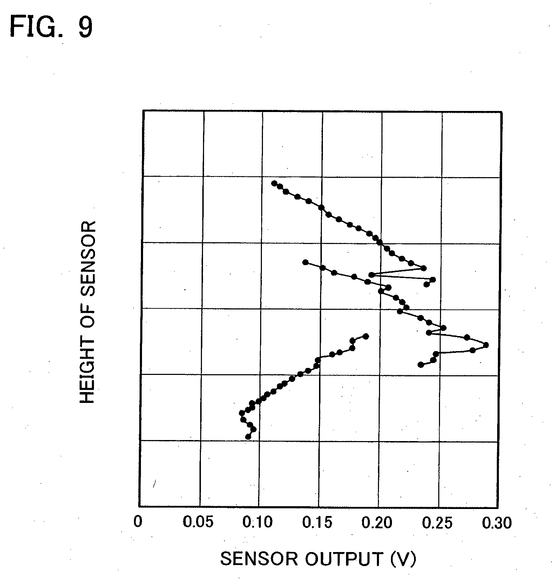

As an example, FIG. 9 shows a detection result of a sensor output in a test carried out by the applicant of the present invention when a head restraint was provided with a capacitance sensor with a user being sitting down on a seat. In FIG. 9, tests were carried out for three kinds of head restraint having a sensing electrode at a bottom portion, a center, and an upper portion, respectively. Note that the vertical axis in FIG. 9 represents a distance (height of sensor) from a center of the sensing electrode to a top of the seat, while the horizontal axis represents a sensor output at each detection position. A distance between the head of the user and the head restraint was maintained to 20 mm, and the tests were carried out while the user came to rest as much as possible.

As a result, as is clear from FIG. 9, a sensor output hardly became stabilized, and it can be expected that an output has a further unstable behavior in a riding condition at a normal time. Based on the test results, adjusting a position of the head restraint highly precisely by carrying out the detection operation in the foregoing detection fashion requires an adjustment time, and is difficult to carry out.

The present invention has been made in view of the foregoing circumstance, and it is an object of the present invention to provide a head restraint position adjusting device and a head restraint position adjusting method which can automatically adjust a position of a head restraint highly precisely within a short time.

### Means for Solving the Problem

A head restraint position adjusting device according to the present invention includes: at least three sensing electrodes provided side by side in a height direction in a head restraint provided on a seat of a vehicle and configured to sense capacitances between a human body sitting on the seat and the head restraint; a detection circuit configured to detect an estimated center position of a head of the human body in the height direction based on sensing signals from the at least three sensing electrodes; and position adjusting means configured to, in accordance with a detection result from the detection circuit, adjust a position of the head restraint relative to the seat based on the estimated center position; characterized in that in a case (a) where there is any sensing electrode that indicates a larger capacitance value than that of its adjoining sensing electrode located under it among sensing electrodes located above a largest value sensing electrode, which has sensed a capacitance indicating a largest capacitance value among capacitance values of capacitances sensed by the respective sensing electrodes, the detection circuit being configured to detect as the estimated center position, a position that horizontally corresponds to a sensing electrode that has sensed a capacitance indicating a largest capacitance value among capacitance values of capacitances sensed by any such sensing electrodes that indicate a larger capacitance value, and in any other case than the case (a), the detection circuit being configured to detect a position that horizontally corresponds to the largest value sensing electrode as the estimated center position.

The head restraint position adjusting device of the present invention having the foregoing configuration can appropriately and automatically adjust a position of the head restraint relative to the seat from a resting state based on the estimated center position of the head in the height direction. Accordingly, it is possible to adjust a position of the head restraint highly precisely within a short time.

Since the position of the head restraint can be automatically adjusted in accordance with the estimated center position of the head in the height direction, it is possible to suppress any accident like cervical spine injury of a driver/passenger when a vehicle collides under a condition in which a position of the head restraint is not adjusted. Further, since an estimated center position of the head of a human body can be securely detected using capacitance values from the at least three sensing electrodes, it is possible to perform highly precise position adjustment without being influenced by the position of the shoulder or neck or the sitting height of the human body, or such factors.

In a case where, for example, the largest value sensing electrode is located above a predetermined sensing electrode, the detection circuit may detect a position that horizontally corresponds to the largest value sensing electrode as the estimated center position among the at least three sensing electrodes.

For example, the at least three sensing electrodes are each formed in a rectangular strip shape having a longer side exist in a width direction of a front face of the head restraint, the width direction being intersecting with the height direction.

The detection circuit may include: a plurality of capacitance sensing circuits connected to the at least three sensing electrodes in one-to-one correspondence and configured to output information indicating capacitances sensed by the sensing electrodes respectively; and an arithmetic processing circuit configured to calculate the estimated center position by comparing the capacitances based on the information from the plurality of capacitance sensing circuits and output calculation result information to the adjusting means.

The detection circuit may include: a time-division circuit connected to the at least three sensing electrodes; a capacitance sensing circuit configured to output information indicating capacitances sensed by the sensing electrodes at different times respectively due to the time-division circuit; and an arithmetic processing circuit configured to calculate the estimated center position by comparing the capacitances based on the information from the capacitance sensing circuit and output calculation result information to the adjusting means.

A head restraint position adjusting method according to the present invention includes: a sensing step of sensing capacitances between the human body and a head restraint provided on a seat of a vehicle by at least three sensing electrodes provided side by side in a height direction in the head restraint; a detecting step of detecting an estimated center position, in the height direction, of a head of the human body sitting on the seat, based on sensing signals from the at least three sensing electrodes indicating the capacitances sensed in the sensing step; and an adjusting step of adjusting a position of the head restraint relative to the seat based on the estimated center position detected in the detecting step, characterized in that in a case (a) where there is any sensing electrode that indicates a larger capacitance value than that of its adjoining sensing electrode located under it among sensing electrodes that are located above a largest value sensing electrode, which has sensed a capacitance indicating a largest capacitance value among capacitance values of capacitances sensed by the respective sensing electrodes in the sensing step, the detecting step being operative to detect as the estimated center position, a position that horizontally corresponds to a sensing electrode that has sensed a capacitance indicating a largest capacitance value among capacitance values of capacitances sensed by any such sensing electrodes that indicate a larger capacitance value, in any other case than the case (a), the detecting step being operative to detect a position that horizontally corresponds to the largest value sensing electrode as the estimated center position.

The head restraint position adjusting method of the present invention having the foregoing configuration can appropriately and automatically adjust a position of the head restraint relative to the seat from a resting state based on the estimated center position of the head in the height direction. Accordingly, it is possible to adjust a position of the head restraint highly precisely within a short time.

Since the position of the head restraint can be automatically adjusted in accordance with the estimated center position of the head in the height direction, it is possible to suppress any accident like cervical spine injury of a driver/passenger when a vehicle collides under a condition in which a position of the head restraint is not adjusted. Further, since an estimated center position of the head of a human body can be securely detected using capacitance values from the at least three sensing electrodes, it is possible to perform highly precise position adjustment without being influenced by the position of the shoulder or neck or the sitting height of the human body, or such factors.

### Effect of the Invention

According to the present invention, it is possible to provide a head restraint position adjusting device and a head restraint position adjusting method that can appropriately and automatically adjust the position of a head restraint relative to a seat from a resting state based on an estimated center position of a head in a height direction and can adjust the position of the head restraint highly precisely in a short time.

### Best Mode for Carrying Out the Invention

An explanation will be given of a preferred embodiment for a head restraint position adjusting device and a head restraint position adjusting method of the present invention with reference to the accompanying drawings.

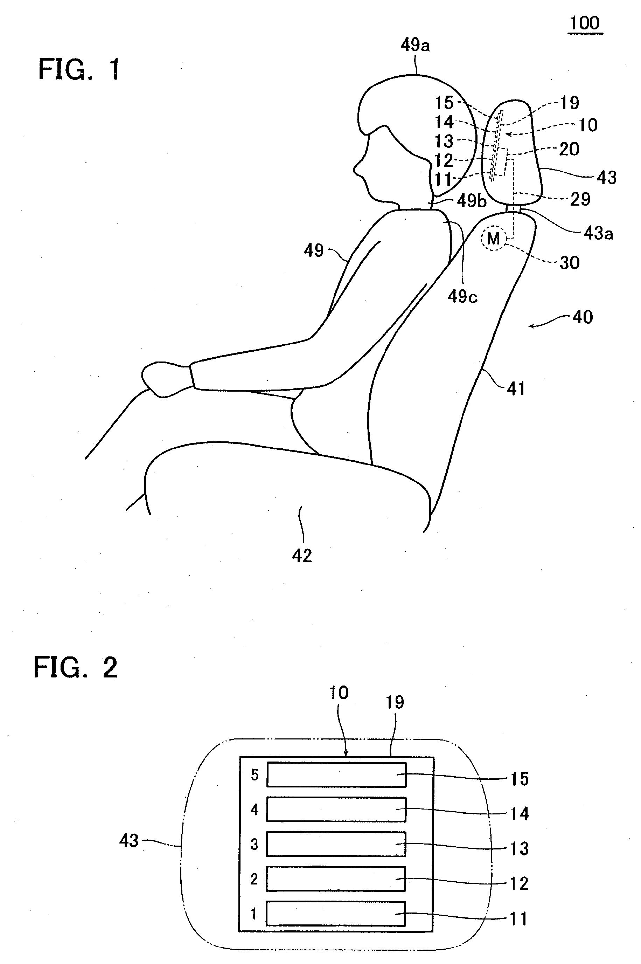

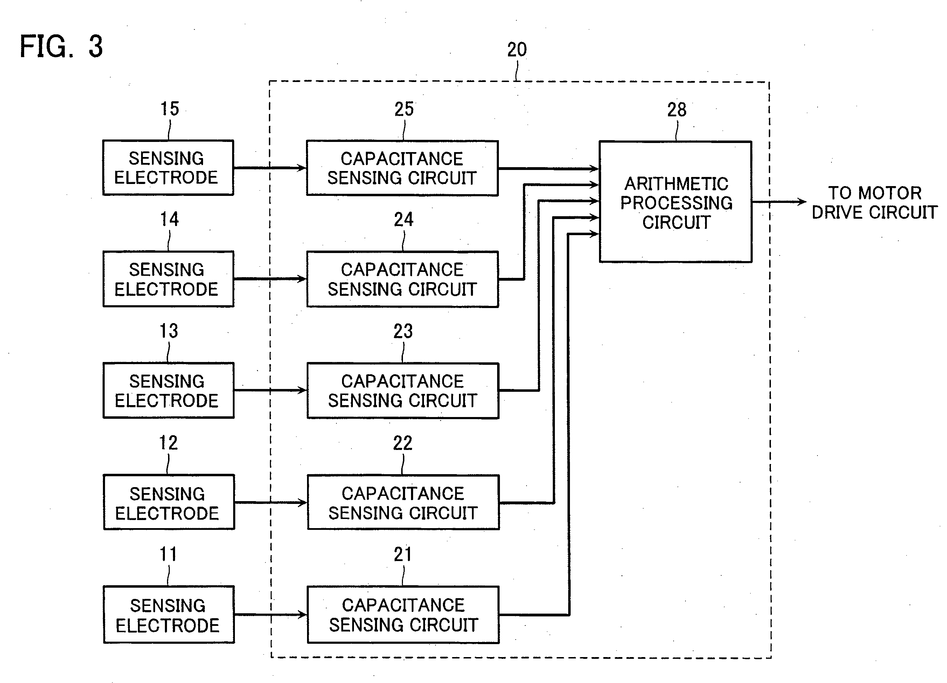

FIG. 1 is a schematic diagram showing an example of a seat in a vehicle provided with a head restraint position adjusting device according to a first embodiment of the present invention. FIG. 2 is an explanatory diagram showing an example arrangement of a part of the head restraint position adjusting device in a head restraint. FIG. 3 is a block diagram showing an example of a whole configuration of the head restraint position adjusting device.

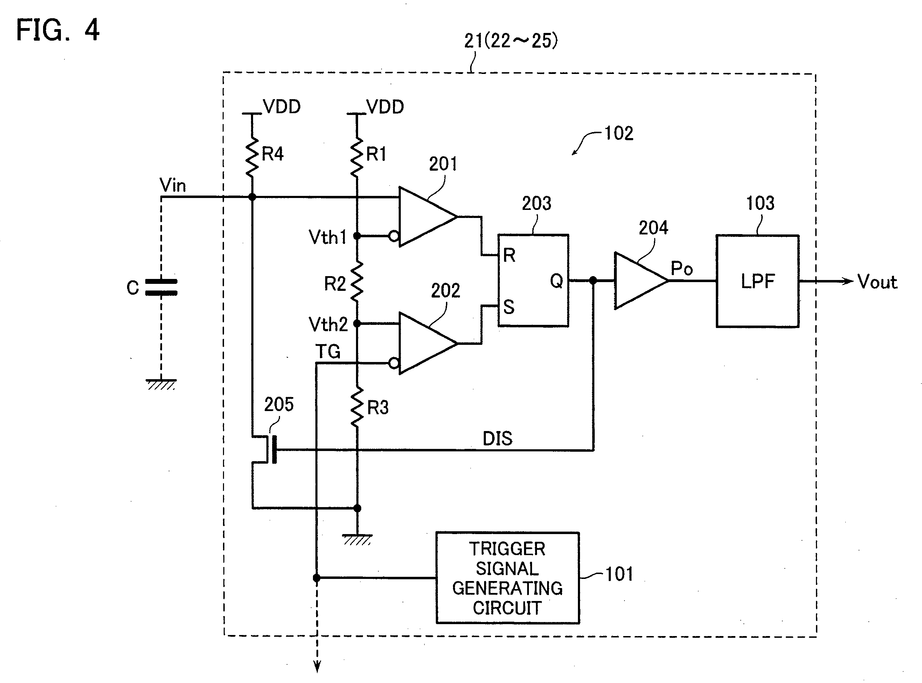

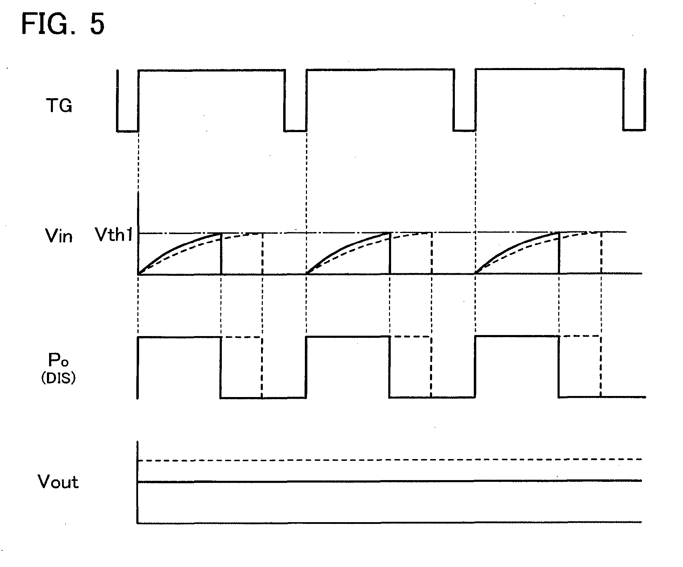

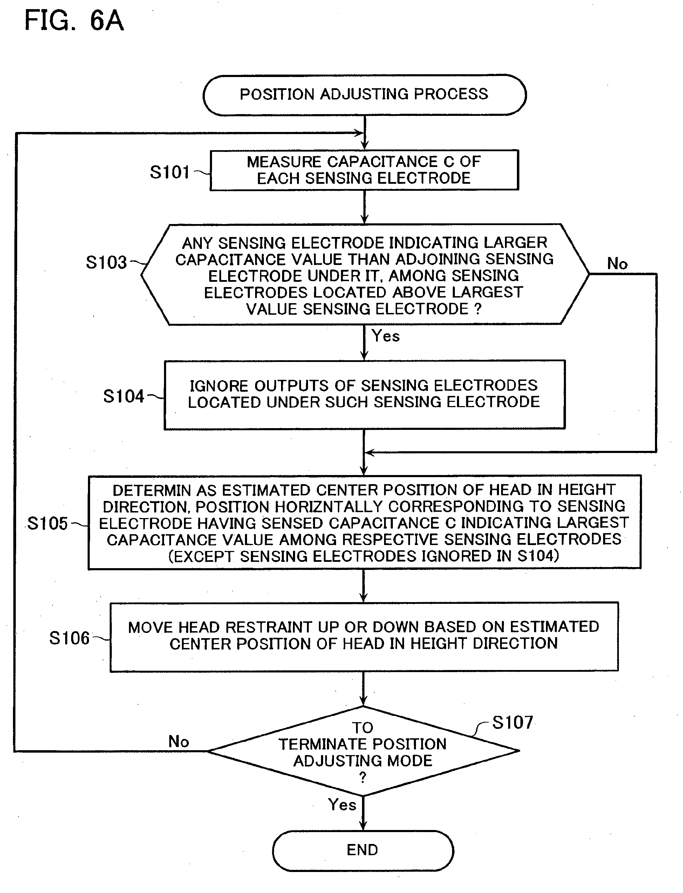

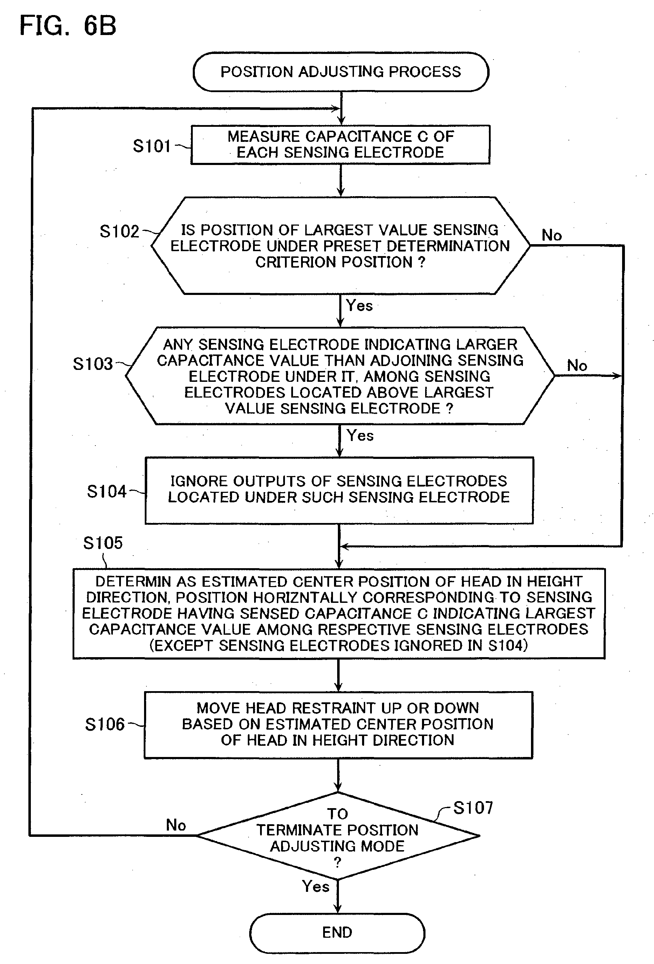

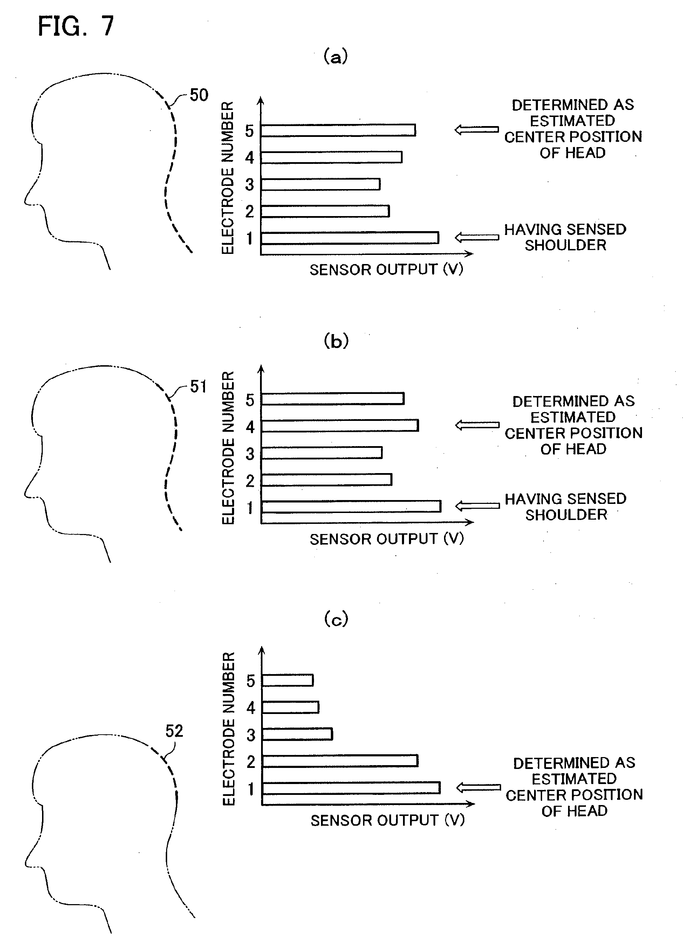

FIG. 4 is a block diagram showing an example configuration of a capacitance sensing circuit of the head restraint position adjusting device. FIG. 5 is an operation waveform chart showing examples of operation waveforms of a detection circuit of the head restraint position adjusting device. FIG. 6A and FIG. 6B are flowcharts showing examples of procedures of a head restraint position adjusting process of the head restraint position adjusting device. FIGS. 7 are explanatory diagrams showing examples of outputs of sensing electrodes of the head restraint position adjusting device.

As shown in FIGS. 1 and 2, a head restraint position adjusting device 100 is provided in a seat 40 of a vehicle and the like, and comprises, for example, a capacitance sensor unit 10 arranged in a head restraint 43 of the seat 40, and a drive motor unit 30 arranged in a backrest 41 of the seat 40. In the present example, the capacitance sensor unit 10 and the drive motor unit 30 are electrically connected together by a harness 29.

The capacitance sensor unit 10 comprises, for example, plural sensing electrodes 11 to 15 formed on one face of a board 19, and a detection circuit 20 formed on another face of the board 19, and detects a predetermined portion (e.g., a portion other than a head 49a, such as shoulder and neck) and a head 49a of a human body 49 sitting on a seating portion 42 of the seat 40. That is, the capacitance sensor unit 10 senses capacitances between the predetermined portion and head 49a of the human body 49 and the head restraint 43 (more specifically, the sensing electrodes 11 to 15). Here, capacitance values to be sensed by the sensing electrodes 11 to 15 and detected represent such values as will be detected after being treated with zero tracking for treating a capacitance value in the condition that no human body 49 is sitting on the seating portion 42 of the seat 40 as zero. A capacitance is a quantity of electricity required for increasing the potential of a conductor or capacitor by a unit quantity, and has the same meaning as electrical capacitance. A capacitance value is the quantity of electricity of a capacitance that is numerically conversed, and also includes, for example, a measurement of a capacitance sensed per unit area of each of the sensing electrodes 11 to 15.

The board 19 comprises, for example, a flexible printed board, a rigid board, or a rigid-flexible board. The plural sensing electrodes 11 to 15 are formed of copper, a copper alloy, or aluminum formed and patterned on the board 19 formed of an insulating body such as polyethylene terephthalate (PET), polyethylene naphthalate (PEN), polyimide (PI), polyamide (PA), or an epoxy resin.

The plural sensing electrodes 11 to 15 are each formed on the front face of the head restraint 43 in a rectangular strip shape having a longer side in a width direction intersecting with the height direction of the head restraint 43, and are arranged side by side in a line in such a way that the longer sides of the respective sensing electrodes 11 to 15 are lined up along the height direction of the head restraint 43.

For example, electrode numbers 1 to 5 are allocated to the plural sensing electrodes 11 to 15 from the bottom to the top. These sensing electrodes 11 to 15 include five electrodes in this example, but only a number of electrodes that are necessary for the predetermined portion or the head 49a of the human body 49 sitting on the seat 40 to be detected and for an estimated center position of the head 49a in the height direction to be detected while the head restraint 43 is in its resting state need to be provided, and more than said necessary electrodes may be provided.

Here, the necessary number as aforementioned refers to a necessary number of electrodes that is calculated based on the shape (e.g., width and height) and sensing range (area) of the detection electrodes 11 to 15 required to detect an estimated center position of the head 49a in the height direction. In this example, five electrodes are provided as said above, but only three electrodes at least, and preferably four electrodes will do for the present embodiment, and they need not be rectangular.

The detection circuit 20 detects an estimated center position of the head 49a in the height direction based on sensing signals from the plural sensing electrodes 11 to 15 (i.e., by comparing capacitance values indicated by the sensing signals from the respective sensing electrodes 11 to 15).

As shown in FIG. 3, the detection circuit 20 comprises: plural capacitance sensing circuits 21 to 25 which are connected to the plural sensing electrodes 11 to 15 in one-to-one correspondence, and which output information indicating capacitances sensed by the sensing electrodes 11 to 15; and an arithmetic processing circuit 28 which is connected to the capacitance sensing circuits 21 to 25, compares capacitances based on the information output by the capacitance sensing circuits 21 to 25, calculates an estimated center position of the head 49a in the height direction, and outputs calculation result information to a motor drive circuit (not shown) of the drive motor unit 30.

Each of the plural capacitance sensing circuits 21 to 25 generates a pulse signal having a duty ratio changing in accordance with a capacitance between the corresponding one of the sensing electrodes 11 to 15 and the neck 49b, the shoulder 49c or the head 49a of the human body 49, and outputs a sensing signal by smoothing the pulse signal. The arithmetic processing circuit 28 comprises, for example, a CPU and the like, compares capacitances based on the sensing signals from the capacitance sensing circuits 21 to 25, detects an estimated center position of the head 49a in the height direction, and outputs a control signal based on a calculation result to the drive motor unit 30 which changes a position of the head restraint 43.

As shown in FIG. 4, each capacitance sensing circuit 21 (22 to 25) changes a duty ratio in accordance with a capacitance C, and comprises, for example, a trigger signal generating circuit 101 which outputs a trigger signal TG with a constant period, a timer circuit 102 which outputs a pulse signal Po having a duty ratio changing in accordance with a largeness of the capacitance C connected to an input terminal, and a low-pass filter (LPF) 103 which performs smoothing on the pulse signal Po.

The timer circuit 102 comprises, for example, two comparators 201, 202, an RS flip-flop circuit (hereinafter, "RS-FF") 203 having a reset terminal R and a set terminal S into which outputs of the comparators 201, 202 are respectively input, a buffer 204 which outputs an output DIS of the RS-FF 203 to the LPF 103, and a transistor 205 which is turned on/off by the output DIS from the RS-FF 203.

The comparator 202 compares the trigger signal TG shown in FIG. 5 and output by the trigger signal generating circuit 101 with a prescribed threshold Vth2 divided by resistors R1, R2, and R3, and outputs a set pulse synchronized with the trigger signal TG. The set pulse sets an output Q of the RS-FF 203.

The output Q turns off the transistor 205 as the discharge signal DIS, and electrically charges between the sensing electrode 11 (12 to 15) and a ground at a speed defined by a time constant set by the grounded capacitance C of the sensing electrode 11 (12 to 15) and a resistor R4 connected between the input terminal and a power-supply line. Accordingly, a potential of an input signal Vin increases at a speed defined by the capacitance C.

If the input signal Vin becomes larger than a threshold Vth1 defined by the resistors R1, R2, and R3, an output of the comparator 201 is inverted, and an output of the RS-FF 203 is also inverted. As a result, the transistor 205 turns on, and a charge trapped in the sensing electrode 11 (12 to 15) is discharged through the transistor 205.

Therefore, as shown in FIG. 5, the timer circuit 102 outputs the pulse signal Po which oscillates at a duty ratio that is based on the capacitance C between the sensing electrode 11 (12 to 15) and the neck 49b, the shoulder 49c, or the head 49a of the human body 49 which comes close thereto. The LPF 103 performs smoothing on this output, and outputs a direct-current sensing signal Vout as shown in FIG. 5. Note that in FIG. 5, a waveform indicated by a solid line and a waveform indicated by a dotted line mean that the former has a smaller capacitance than the latter, and for example, the latter represents a condition that an object comes close.

The drive motor unit 30 comprises: a motor drive circuit which, based on a control signal from the arithmetic processing circuit 28 that has calculated an estimated center position of the head 49a in the height direction based on the sensing signals Vout from the respective capacitance sensing circuits 21 to 25, controls a non-illustrated drive motor to change a position of the head restraint 43 relative to the backrest 41 of the seat 40 based on the estimated center position of the head 49a in the height direction; and the drive motor which actually changes the position of the head restraint 43 under the control of the motor drive circuit. To be specific, the drive motor drives a support shaft 43a of the head restraint 43 in a way that the support shaft 43a can freely move in the up and down direction, the left and right direction, and the back and forth direction.

According to the head restraint position adjusting device 100 having the foregoing configuration, for example, the capacitance C between each of the sensing electrodes 11 to 15 of the capacitance sensor unit 10 and the neck 49b, the shoulder 49c, or the head 49a of the human body 49 is detected in an initial condition (a condition that the head restraint 43 is positioned at the closest position to the backrest 41), and the detection circuit 20 detects and compares peaks of respective such outputs with one another, thereby acquiring the estimated center position of the head 49 in the height direction.

The procedure of the position adjusting process of the head restraint position adjusting device 100 having this configuration is as follows, for example. As shown in FIG. 6A, when an ignition switch of an automobile is turned to ACC or ON and, for example, a position adjusting mode of the head restraint position adjusting device 100 is automatically turned ON, the capacitance sensing circuits 21 to 25 of the detection circuit 20 measure the capacitances C indicated by the sensing electrodes 11 to 15 (step S101).

The capacitance detection circuits 21 to 25 respectively output information indicating the measured capacitances C to the arithmetic processing circuit 28, which then determines whether there is any sensing electrode that indicates a larger capacitance value than that of its adjoining sensing electrode located under it among sensing electrodes that are located above a largest value sensing electrode, which has sensed a capacitance indicating the largest capacitance value among the capacitance values based on the capacitances C sensed by the sensing electrodes 11 to 15 (step S103).

When it is determined that there is any such electrode (Yes in step S103), the arithmetic processing circuit 28 ignores the outputs of the sensing electrodes located under the sensing electrode in question (step S104), and determines a position horizontally corresponding to the sensing electrode that has sensed the capacitance C indicating the largest capacitance value among the sensing electrodes except the ones whose outputs are ignored, as an estimated center position of the head 49a (step S105).

On the other hand, when it is determined in step S103 that there is no such electrode (No in step S103), the flow goes to step S105 described above, in which a position that horizontally corresponds to the largest value sensing electrode is determined as an estimated center position of the head 49a.

The detection circuit 20 outputs calculation result information indicating the determined estimated center position to the motor drive circuit of the drive motor unit 30, and the motor drive circuit controls the drive motor to move the head restraint 43 upward or downward based on the estimated center position of the head 49a in the height direction (step S106).

After the head restraint 43 is moved in this way, the detection electrode 20 determines whether or not to terminate the aforementioned position adjusting mode (step S107). When it is determined not to terminate (No in step S107), the flow goes to step S101 described above to repeat the subsequent steps. When it is determined to terminate the position adjusting mode (Yes in step S107), the sequence of the position adjusting process based on this flowchart ends.

In step S103 and step S104 described above, for example, the outputs of the sensing electrodes located above the largest value sensing electrode are compared with each other from those of the undermost adjoining ones to those of upper adjoining ones in turn, and when any sensing electrode is detected that indicates a larger capacitance value than that of its adjoining sensing electrode located under it (Yes in step S103), the outputs of the sensing electrodes that are located under this detected sensing electrode are ignored (step S104).

Alternatively, the position any sensing electrodes located under which will have their outputs ignored in step S104 may be set beforehand to an arbitrary position such as the center position of the head restraint 43 in its whole length in the height direction, so that when step S103 results in Yes, the outputs of sensing electrodes located under the arbitrary position may be ignored (step S104).

Furthermore, for example, as shown in FIG. 6B, after the detection circuit 20 measures the capacitances C of the respective sensing electrodes in step S101, and before step S103, a process (step S102) may be performed in which it is determined whether or not the position of the largest value sensing electrode is under a preset determination criterion position (which may be set to, for example, the center position of the head restraint 43 in its whole length in the height direction or to, for example, the undermost position of the head restraint 43). When it is determined that the largest value sensing electrode is under the determination criterion position (Yes in step S102), the flow may go to step S103, while when it is determined that the largest value sensing electrode is not under the determination criterion position (No in step S102), the flow may jump straight to step S105, after which position adjustment may be performed.

This position adjusting process will now be explained based on examples of outputs, shown in FIGS. 7, of the sensing electrodes of the head restraint position adjusting device.

FIGS. 7 (a) to (c) show relationships, acquired from a test conducted by the applicant, between the height-direction positions (occipital region shapes 50 to 52) of the head of a human body relative to the sensing electrodes 11 to 15 (electrode numbers 1 to 5) arranged in the head restraint side by side in the height direction and the outputs (V) of the sensing electrodes 11 to 15 (electrode numbers 1 to 5).

According to the occipital region shapes 50 to 52 shown in FIGS. 7 (a) to (c), the sitting height of the human body 49 descends as occipital region shape 50>occipital region shape 51>occipital region shape 52. Nevertheless, in all the cases, output results were obtained that show that the sensor output largest of the outputs of the sensing electrodes 11 to 15 (electrode numbers 1 to 5) is detected by the sensing electrode 11 (electrode number 1).

According to the position adjusting process described above, for example, as shown in FIG. 7 (a), in a case where the sensor output of the sensing electrode 11 (electrode number 1) is the largest (Yes in step S102 described above) and there is any sensing electrode whose sensor output is larger than that of its adjoining sensing electrode located under it among the sensing electrodes 12 to 15 (electrode numbers 2 to 5) located above the sensing electrode 11, i.e., in a case where there is the sensing electrode 14 (electrode number 4) whose sensor output is larger than that of the sensing electrode 13 (electrode number 3) (Yes in step S103 described above), the sensor outputs of the sensing electrodes 11 to 13 (electrode numbers 1 to 3) located under the sensing electrode 14 (electrode number 4) are ignored (step S104 described above). Then, the position that horizontally corresponds to the sensing electrode 15 (electrode number 5) whose sensor output is the larger of the sensor outputs of the sensing electrodes 14 and 15 (electrode numbers 4 and 5) is determined as the estimated center position of the head 49a (step S105 described above).

That is, by ignoring the sensing electrode 11 (electrode number 1) that has detected the largest sensor output (i.e., by estimating that the sensing electrode 11 has sensed, for example, the shoulder 49c), it is possible to determine the estimated center position of the head 49a without being influenced by the shoulder 49c.

Likewise, as shown in FIG. 7 (b), in a case where the sensor output of the sensing electrode 11 (electrode number 1) is the largest (Yes in step S102 described above) and there is any sensing electrode whose sensor output is larger than that of its adjoining sensing electrode located under it among the sensing electrodes 12 to 15 (electrode numbers 2 to 5) located above the sensing electrode 11, i.e., in a case where there is the sensing electrode 14 (electrode number 4) whose sensor output is larger than that of the sensor output 13 (electrode number 3) (Yes in step S103 described above), the sensor outputs of the sensing electrodes 11 to 13 (electrode numbers 1 to 3) located under the sensing electrode 14 (electrode number 4) are ignored (step S104 described above). Then, the position that horizontally corresponds to the sensing electrode 14 (electrode number 4) whose sensor output is the larger of the sensor outputs of the sensing electrodes 14 and 15 (electrode numbers 4 and 5) is determined as the estimated center position of the head 49a (step S105 described above).

Further, as shown in FIG. 7 (c), in a case where the sensor output of the sensing electrode 11 (electrode number 1) is the largest (Yes in step S102 described above) and there is no sensing electrode whose sensor output is larger than that of its adjoining sensing electrode located under it among the sensing electrodes 12 to 15 (electrode numbers 2 to 5) located above the sensing electrode 11 (No in step S103), the position that horizontally corresponds to the sensing electrode 11 (electrode number 1) whose sensor output is the largest is determined as the estimated center position of the head 49a (step S105 described above).

In this way, by performing the above-described position adjusting process, the head restraint position adjusting device 100 of the present example can determine the estimated center position of the head 49a in accordance with the sitting height of the human body 49, i.e., occipital region shape 50>occipital region shape 51>occipital region shape 52.

Hence, the head restraint position adjusting device 100 of the present example can obtain the estimated center position of the head 49a in the height direction without moving the head restraint 43 from the aforementioned initial condition and can place the head restraint 43 at an optimum position for the head 49a by one head restraint moving operation for position adjustment. Therefore, it is possible to perform highly precise position adjustment for the head restraint 43 in a short time. Accordingly, it is possible to suppress any accident like cervical spine injury of the human body 49 when a vehicle collides under a condition in which a position of the head restraint 43 is not adjusted.

Note that the capacitance sensor unit 10 and the drive motor unit 30 in the head restraint position adjusting device 100 are connected together via the harness 29 in the present example, but the drive motor unit 30 may be controlled in a wireless manner or the like. Moreover, the drive motor unit 30 may be built together with the capacitance sensor unit 10, and may be arranged in the head restraint 43.

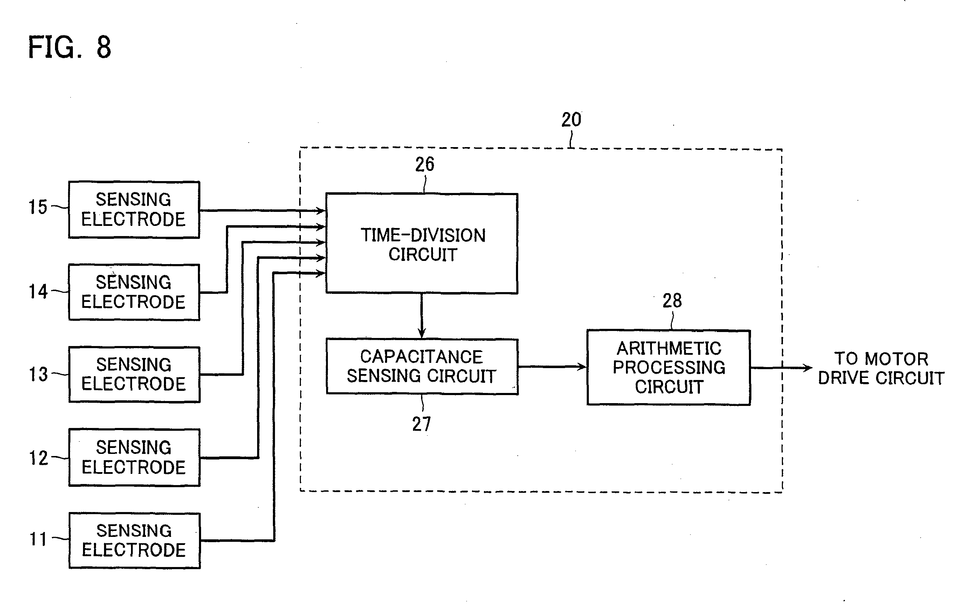

FIG. 8 is a block diagram showing another example of a whole configuration of a head restraint position adjusting device according to one embodiment of the present invention. Hereinbelow, any portions that are the same as those already explained will be denoted by the same reference numerals and not be explained redundantly. As shown in FIG. 8, the detection circuit 20 comprise a time-division circuit 26 connected to each of the sensing electrodes 11 to 15, a capacitance sensing circuit 27 that outputs information indicating capacitances sensed by the sensing electrodes 11 to 15 at different times respectively due to the time-division circuit 26, and an arithmetic processing circuit 28 that calculates an estimated center position of the head 49a in the height direction by comparing the capacitances based on the information output by the capacitance sensing circuit 27, and outputs calculation result information to the motor drive circuit of the drive motor unit 30.

The detection circuit 20 having this configuration can scan capacitances from the respective sensing electrodes 11 to 15 in turn via the time-division circuit 26, and obtain an estimated center position of the head 49a in the height direction based on the scanning result. Accordingly, by employing the detection circuit 20 having this configuration, it is also possible to perform highly precise position adjustment for the head restraint 43 in a short time.

The embodiment described above has been explained with an example in which the head restraint position adjusting device 100 is applied to the head restraint 43 of the seat 40 of a vehicle. However, the head restraint position adjusting device 100 can also be applied to an attraction vehicle seat, a theater seat, etc. that have a position-adjustable head restraint.

### Industrial Applicability

The present invention is useful for a device, which adjusts a position of a head restraint of an automobile, etc., to particularly perform highly precise position adjustment in a short time.

### Brief Description of Drawings

FIG. 1 is a schematic diagram showing an example of a seat of a vehicle provided with a head restraint position adjusting device according to one embodiment of the present invention;
FIG. 2 is an explanatory diagram showing an example arrangement of a part of the head restraint position adjusting device in a head restraint;
FIG. 3 is a block diagram showing an example of a whole configuration of the head restraint position adjusting device;
FIG. 4 is a block diagram showing an example configuration of a capacitance sensing circuit of the head restraint position adjusting device;
FIG. 5 is an operation waveform chart showing examples of operation waveforms of a detection circuit of the head restraint position adjusting device;
FIG. 6A is a flowchart showing an example of a procedure of a head restraint position adjusting process of the head restraint position adjusting device;
FIG. 6B is a flowchart showing an example of a head restraint position adjusting process of the head restraint position adjusting device;
FIGS. 7 are explanatory diagrams showing examples of outputs of sensing electrodes of the head restraint position adjusting device;
FIG. 8 is a block diagram showing another example of the whole configuration of the head restraint position adjusting device; and
FIG. 9 is a diagram showing detection results of sensor outputs in a test conducted by the applicant.

### Explanation of Reference Numerals

- 10: capacitance sensor unit
- 11 to 15: sensing electrodes
- 19: board
- 20: detection circuit
- 21 to 25, 27: capacitance sensing circuit
- 26: time-division circuit
- 28: arithmetic processing circuit
- 29: harness
- 30: drive motor unit
- 40: seat
- 41: backrest
- 42: seating portion
- 43: head restraint
- 43a: support shaft
- 49: human body
- 49a: head
- 49b: neck
- 49c: shoulder

## Claims

1. A head restraint position adjusting device (100), comprising:
at least three sensing electrodes (11 - 15) provided side by side in a height direction in a head restraint provided on a seat of a vehicle and configured to sense capacitances between a human body sitting on the seat and the head restraint (43);
a detection circuit (20) configured to detect an estimated center position of a head of the human body in the height direction based on sensing signals from the at least three sensing electrodes; and
position adjusting means configured to, in accordance with a detection result from the detection circuit, adjust a position of the head restraint relative to the seat based on the estimated center position;
**characterized in that**
in a case (a) where there is any sensing electrode that indicates a larger capacitance value than that of its adjoining sensing electrode located under it among sensing electrodes located above a largest value sensing electrode, which has sensed a capacitance indicating a largest capacitance value among capacitance values of capacitances sensed by the respective sensing electrodes, the detection circuit being configured to detect as the estimated center position, a position that horizontally corresponds to a sensing electrode that has sensed a capacitance indicating a largest capacitance value among capacitance values of capacitances sensed by any such sensing electrodes that indicate a larger capacitance value, and
in any other case than the case (a), the detection circuit being configured to detect a position that horizontally corresponds to the largest value sensing electrode as the estimated center position.

2. The head restraint position adjusting device according to claim 1, wherein in a case where the largest value sensing electrode is located above a predetermined sensing electrode, the detection circuit detects a position that horizontally corresponds to the largest value sensing electrode as the estimated center position among the at least three sensing electrodes.

3. The head restraint position adjusting device according to claim 1 or 2, wherein the at least three sensing electrodes are each formed in a rectangular strip shape having a longer side exist in a width direction of a front face of the head restraint, the width direction being intersecting with the height direction.

4. The head restraint position adjusting device according to any one of claims 1 to 3, wherein the detection circuit includes: a plurality of capacitance sensing circuits (21 - 25, 27) connected to the at least three sensing electrodes in one-to-one correspondence and configured to output information indicating capacitances sensed by the sensing electrodes respectively; and an arithmetic processing circuit (28) configured to calculate the estimated center position by comparing the capacitances based on the information from the plurality of capacitance sensing circuits and output calculation result information to the adjusting means.

5. The head restraint position adjusting device according to any one of claims 1 to 3, wherein the detection circuit includes: a time-division circuit (26) connected to the at least three sensing electrodes; a capacitance sensing circuit (21 - 25, 27) configured to output information indicating capacitances sensed by the sensing electrodes at different times respectively due to the time-division circuit; and an arithmetic processing circuit (28) configured to calculate the estimated center position by comparing the capacitances based on the information from the capacitance sensing circuit and output calculation result information to the adjusting means.

6. A head restraint position adjusting method, comprising:
a sensing step of sensing capacitances (21 - 25, 27) between the human body (49) and a head restraint (43) provided on a seat (40) of a vehicle by at least three sensing electrodes (11 - 15) provided side by side in a height direction in the head restraint;
a detecting step of detecting an estimated center position, in the height direction, of a head (49a) of the human body sitting on the seat, based on sensing signals from the at least three sensing electrodes indicating the capacitances sensed in the sensing step; and
an adjusting step of adjusting a position of the head restraint relative to the seat based on the estimated center position detected in the detecting step,
**characterized in that**
in a case (a) where there is any sensing electrode that indicates a larger capacitance value than that of its adjoining sensing electrode located under it among sensing electrodes that are located above a largest value sensing electrode, which has sensed a capacitance indicating a largest capacitance value among capacitance values of capacitances sensed by the respective sensing electrodes in the sensing step, the detecting step being operative to detect as the estimated center position, a position that horizontally corresponds to a sensing electrode that has sensed a capacitance indicating a largest capacitance value among capacitance values of capacitances sensed by any such sensing electrodes that indicate a larger capacitance value,
in any other case than the case (a), the detecting step being operative to detect a position that horizontally corresponds to the largest value sensing electrode as the estimated center position.

7. The head restraint position adjusting method according to claim 6, wherein in the detecting step, in a case where the largest value sensing electrode is located above a predetermined sensing electrode, a position that horizontally corresponds to the largest value sensing electrode, among the at least three sensing electrodes, is detected as the estimated center position.

8. The head restraint position adjusting method according to claim 6 or 7, wherein the at least three sensing electrodes are each formed in a rectangular strip shape having a longer side exist in a width direction of a front face of the head restraint, the width direction being intersecting with the height direction.

## Patentansprüche

1. Vorrichtung zur Positionseinstellung einer Kopfstütze (100), umfassend:
mindestens drei Messelektroden (11 - 15), die nebeneinander in einer Höhenrichtung in einer Kopfstütze, die an einem Sitz eines Fahrzeugs ausgebildet ist, vorgesehen sind und dazu dienen, Kapazitäten zwischen einem auf dem Sitz sitzenden menschlichen Körper und der Kopfstütze (43) zu erfassen;
eine Erfassungsschaltung (20), die dazu dient, einen geschätzten Mittelposition eines Kopfes des menschlichen Körpers in der Höhenrichtung auf der Grundlage von Erfassungssignalen von den wenigstens drei Messelektroden zu erfassen; und
Positionseinstellmittel, die dazu dienen, in Übereinstimmung mit einem Erfassungsergebnis von der Erfassungsschaltung eine Position der Kopfstütze relativ zu dem Sitz auf der Grundlage der geschätzten Mittelposition einzustellen;
**dadurch gekennzeichnet, dass**
in einem Fall (a), bei dem es eine Erfassungselektrode gibt, die, von den Messelektroden, die über einer Messelektrode mit einem größten Wert angeordnet sind, die von den Kapazitätswerten der durch die jeweiligen Messelektroden erfassten Kapazitäten, eine Kapazität erfasst hat, die eine größten Kapazitätswert angibt, einen größeren Kapazitätswert als ihre benachbarte Messelektrode darunter aufweist, der Erfassungsschritt dazu dient, eine Position als die geschätzte Mittelposition zu erfassen, die horizontal einer Messelektrode entspricht, die, von den Kapazitätswerten der Kapazitäten, die durch solche Messelektroden, die einen größeren Kapazitätswert angeben, erfasst werden, eine Kapazität erfasst hat, die den größten Kapazitätswert angibt, und
in jedem anderen Fall als in dem Fall (a), die Erfassungsschaltung dazu dient, eine Position, die horizontal der Messelektrode mit dem größten Wert entspricht, als die geschätzte Mittelposition zu erfassen.

2. Vorrichtung zur Positionseinstellung einer Kopfstütze nach Anspruch 1, wobei in einem Fall, bei dem sich von den wenigstens drei Messelektroden die Messelektrode mit dem größten Wert über einer vorbestimmten Erfassungselektrode befindet, die Erfassungsschaltung eine Position, die horizontal der Höchstwert-Messelektrode entspricht, als die geschätzte Mittelposition erfasst.

3. Vorrichtung zur Positionseinstellung einer Kopfstütze nach Anspruch 1 oder 2, wobei die wenigstens drei Messelektroden jeweils in Form von rechteckigen Streifen ausgebildet sind, die eine längere Seite in einer Breitenrichtung einer Vorderseite der Kopfstütze aufweisen, wobei sich die Breitenrichtung mit der Höhenrichtung schneidet.

4. Vorrichtung zur Positionseinstellung einer Kopfstütze nach einem der Ansprüche 1 bis 3, wobei die Erfassungsschaltung umfasst: eine Vielzahl von Kapazitätserfassungsschaltungen (21 - 25, 27), die mit den wenigstens drei Messelektroden eins-zu-eins verbunden und zur Ausgabe von Informationen, die von den jeweiligen Messelektroden erfasste Kapazitäten angeben, ausgebildet sind; und eine arithmetische Verarbeitungsschaltung (28), die dazu dient, die geschätzte Mittelposition durch Vergleichen der Kapazitäten auf der Grundlage der Informationen der Vielzahl von Kapazitätserfassungsschaltungen zu berechnen und Berechnungsergebnis-Informationen an die Einstellmittel auszugeben.

5. Vorrichtung zur Positionseinstellung einer Kopfstütze nach einem der Ansprüche 1 bis 3, wobei die Erfassungsschaltung umfasst: eine Zeitmultiplexschaltung (26), die mit den wenigstens drei Messelektroden verbunden ist; eine Kapazitätserfassungsschaltung (21 - 25, 27), die dazu dient, Informationen, die durch die jeweiligen Messelektroden zu verschiedenen Zeiten erfassten Kapazitäten angeben, aufgrund der Zeitmultiplexschaltung auszugeben; und eine arithmetische Verarbeitungsschaltung (28), die dazu dient, die geschätzte Mittelposition durch Vergleichen der Kapazitäten auf der Grundlage der Informationen der Kapazitätserfassungsschaltung zu berechnen und Berechnungsergebnis-Informationen an die Einstellmittel auszugeben.

6. Verfahren zum Einstellen einer Kopfstützenposition, umfassend:
einen Erfassungsschritt zum Erfassen von Kapazitäten (21 - 25, 27) zwischen dem menschlichen Körper (49) und einer auf einem Sitz (40) eines Fahrzeugs vorgesehenen Kopfstütze (43) mithilfe von mindestens drei Messelektroden (11 bis 15), die nebeneinander in einer Höhenrichtung in der Kopfstütze vorgesehen sind;
einen Erfassungsschritt zum Erfassen einer geschätzten Mittelposition in Höhenrichtung des Kopfes (49a) des auf dem Sitz sitzenden menschlichen Körpers auf der Grundlage von Erfassungssignalen der wenigstens drei Messelektroden, die die in dem Erfassungsschritt erfassten Kapazitäten angeben; und
einen Einstellschritt zum Einstellen einer Kopfstützenposition relativ zu dem Sitz auf der Grundlage der in dem Erfassungsschritt erfassten geschätzten Mittelposition,
**dadurch gekennzeichnet, dass**
in einem Fall (a), bei dem es eine Erfassungselektrode gibt, die, von den Messelektroden, die über einer Messelektrode mit einem größten Wert angeordnet sind, einen größeren Kapazitätswert als ihre benachbarte Messelektrode darunter aufweist, die in dem Erfassungsschritt, von den Kapazitätswerten der durch die jeweiligen Messelektroden erfassten Kapazitäten, eine Kapazität erfasst hat, die eine größten Kapazitätswert angibt, der Erfassungsschritt dazu dient, eine Position als die geschätzte Mittelposition zu erfassen, die horizontal einer Messelektrode entspricht, die, von den Kapazitätswerten der Kapazitäten, die durch solche Messelektroden, die einen größeren Kapazitätswert angeben, erfasst werden, eine Kapazität erfasst hat, die den größten Kapazitätswert angibt,
in jedem anderen Fall als in dem Fall (a), der Erfassungsschritt dazu dient, eine Position, die horizontal der Messelektrode mit dem größten Wert entspricht, als die geschätzte Mittelposition zu erfassen.

7. Verfahren zum Einstellen einer Kopfstützenposition nach Anspruch 6, wobei in dem Erfassungsschritt, in einem Fall, bei dem sich von den wenigstens drei Messelektroden die Messelektrode mit dem größten Wert über einer vorbestimmten Erfassungselektrode befindet, eine Position, die horizontal der Messelektrode mit dem größten Wert entspricht, als sie geschätzte Mittelposition erfasst wird.

8. Verfahren zum Einstellen einer Kopfstützenposition nach Anspruch 6 oder 7, wobei die wenigstens drei Messelektroden jeweils in Form von rechteckigen Streifen ausgebildet sind, die eine längere Seite in einer Breitenrichtung einer Vorderseite der Kopfstütze aufweisen, wobei sich die Breitenrichtung mit der Höhenrichtung schneidet.

## Revendications

1. Dispositif de réglage de position d'appui-tête (100), comprenant :
au moins trois électrodes de détection (11 à 15) prévues côte à côte dans la direction de la hauteur dans un appui-tête installé sur un siège du véhicule et configurées pour mesurer des valeurs de capacité entre un corps humain assis sur le siège et l'appui-tête (43),
un circuit de détection (20) configuré pour mesurer une position centrale estimée de la tête du corps humain dans la direction de la hauteur sur la base de signaux de détection provenant des trois électrodes de détection ou plus, et
un moyen de réglage de position configuré pour adapter, en fonction du résultat de détection provenant du circuit de détection, la position de l'appui-tête par rapport au siège sur la base de la position centrale estimée,
**caractérisé en ce que**
dans un cas (a) où il y a une quelconque électrode de détection qui indique une valeur de capacité plus grande que celle de l'électrode de détection conjointe située en dessous parmi les électrodes de détection situées au-dessus de l'électrode de détection de la valeur la plus grande, qui a mesuré une capacité indiquant la plus grande valeur de capacité parmi les valeurs de capacité mesurées par les électrodes respectives de détection, le circuit de détection est configuré pour détecter comme position centrale estimée une position qui correspond horizontalement à une électrode de détection qui a mesuré une capacité indiquant la valeur de capacité la plus grande parmi les valeurs de capacité mesurées par n'importe laquelle de ces électrodes de détection qui indiquent la valeur de capacité la plus grande, et
dans tout autre cas que le cas (a), le circuit de détection est configuré pour mesurer la position qui correspond horizontalement à l'électrode de détection de la valeur la plus grande comme étant la position centrale estimée.

2. Dispositif de réglage de position d'appui-tête selon la revendication 1, dans lequel, dans le cas où l'électrode de détection de valeur la plus grande est située au-dessus d'une électrode prédéterminée de détection, le circuit de détection mesure une position qui correspond horizontalement à l'électrode de détection de la valeur la plus grande comme étant la position centrale estimée parmi les trois électrodes de détection ou plus.

3. Dispositif de réglage de position d'appui-tête selon la revendication 1 ou 2, dans lequel les trois électrodes de détection ou plus sont chacune façonnées en une bande rectangulaire présentant un côté plus long dans la direction de la largeur de la face avant de l'appui-tête, la direction de la largeur représentant une intersection avec la direction de la hauteur.

4. Dispositif de réglage de position d'appui-tête selon l'une quelconque des revendications 1 à 3, dans lequel le circuit de détection inclut : une pluralité de circuits de détection de capacité (21 à 25, 27) reliés aux trois électrodes de détection ou plus en une correspondance biunivoque et configurés pour fournir en sortie des informations indiquant les valeurs de capacités mesurées respectivement par les électrodes de détection, ainsi qu'un circuit de traitement arithmétique (28) configuré pour calculer la position centrale estimée en comparant les capacités sur la base des informations provenant de la pluralité de circuits de détection de capacité, et pour fournir au moyen de réglage les informations de résultat de calcul.

5. Dispositif de réglage de position d'appui-tête selon l'une quelconque des revendications 1 à 3, dans lequel le circuit de détection inclut : un circuit de division de temps (26) relié aux trois électrodes de détection ou plus, un circuit de détection de capacité (21 à 25, 27) configuré pour fournir en sortie des informations indiquant des valeurs de capacités mesurées par les électrodes de détection à des instants différents, respectivement, en raison du circuit de division de temps, ainsi qu'un circuit de traitement arithmétique (28) configuré pour calculer la position centrale estimée en comparant les capacités sur la base des informations provenant du circuit de détection de capacité et pour fournir au moyen de réglage les informations de résultat de calcul.

6. Procédé de réglage de position d'appui-tête, comprenant :
une étape de détection consistant à mesurer des capacités (21 à 25, 27) entre le corps humain (49) et un appui-tête (43) installé sur un siège (40) du véhicule par au moins trois électrodes de détection (11 à 15) prévues côte à côte dans la direction de la hauteur dans l'appui-tête,
une étape de détection consistant à mesurer la position centrale estimée, dans la direction de la hauteur, de la tête (49a) du corps humain assis sur le siège, sur la base des signaux de détection provenant des trois électrodes de détection ou plus indiquant les valeurs des capacités mesurées lors de l'étape de détection, et
une étape de réglage consistant à régler la position de l'appui-tête par rapport au siège sur la base de la position centrale estimée mesurée lors de l'étape de détection,
**caractérisé en ce que**
dans un cas (a) où il existe une quelconque électrode de détection qui indique une valeur de capacité plus grande que celle de l'électrode de détection conjointe située en dessous parmi les électrodes de détection situées au-dessus de l'électrode de détection de la valeur la plus grande, qui a mesuré une capacité indiquant la plus grande valeur de capacité parmi les valeurs de capacité mesurées par les électrodes respectives de détection lors de l'étape de détection, l'étape de détection fonctionnant pour détecter comme position centrale estimée une position qui correspond horizontalement à une électrode de détection qui a mesuré une capacité indiquant la valeur de capacité la plus grande parmi les valeurs de capacité mesurées par n'importe laquelle des électrodes de détection qui indique une valeur de capacité plus grande,
dans tout autre cas que le cas (a), l'étape de détection fonctionne pour mesureer une position qui correspond horizontalement à l'électrode de détection de la valeur la plus grande comme étant la position centrale estimée.

7. Procédé de réglage de position d'appui-tête selon la revendication 6, dans lequel, lors de l'étape de détection, dans le cas où l'électrode de détection de la valeur la plus grande est située au-dessus d'une électrode prédéterminée de détection, il est mesuré comme étant la position centrale estimée une position qui correspond horizontalement à l'électrode de détection de la valeur la plus grande parmi les trois électrodes de détection ou plus.

8. Procédé de réglage de position d'appui-tête selon la revendication 6 ou 7, dans lequel les trois électrodes de détection ou plus sont chacune façonnées en une bande rectangulaire présentant un côté plus long dans la direction de la largeur de la face avant de l'appui-tête, la direction de la largeur représentant une intersection avec la direction de la hauteur.
